# EUROPÄISCHE PATENTSCHRIFT

(11) **EP 1 968 825 B1**
(45) Veröffentlichungstag und Bekanntmachung des Hinweises auf die Patenterteilung: **06.10.2010**
(21) Anmeldenummer: 06830006.0
(22) Anmeldetag: 15.11.2006
(51) Int. Cl.: B60S 1/34

(54) **SCHEIBENWISCHER**
WIPER
ESSUIE-GLACE

(30) Priorität: 28.12.2005 DE 102005062789
(43) Veröffentlichungstag der Anmeldung: 17.09.2008
(73) Patentinhaber: Robert Bosch GmbH, 70442 Stuttgart (DE)
(72) Erfinder: ZIMMER, Joachim, 77880 Sasbach (DE); ESCHENBRENNER, Nicolas, F-67100 Strasbourg (FR)
(86) Internationale Anmeldenummer: PCT/EP2006/068527
(87) Internationale Veröffentlichungsnummer: WO 2007/080009

(56) Entgegenhaltungen:
- FR-A- 1 308 487
- GB-A- 680 690
- US-A- 3 048 430

## Beschreibung

### Stand der Technik

Die vorliegende Erfindung betrifft einen Scheibenwischer gemäß dem Oberbegriff des Patentanspruchs 1, insbesondere einen Scheibenwischer für ein Kraftfahrzeug, und ein entsprechendes Verfahren zur Befestigung des Scheibenwischers gemäß dem Oberbegriff des Patentanspruches 8.

Aus dem Stand der Technik sind Scheibenwischer bekannt, die an einer Antriebswellen befestigt sind, deren zylindrischer Endabschnitt mit einer Rändelung versehen ist. Die Scheibenwischer weisen jeweils einen Wischerarm auf, in dem eine Öffnung ausgebildet ist, die mit einer Rändelung versehen ist. Zur Befestigung wird der Scheibenwischer mit der Öffnung auf die Antriebswelle aufgesteckt, so daß die Rändelung an dem zylindrischen Endabschnitt der Antriebswelle in die Rändelung, die in der Öffnung des Wischerarms ausgebildet ist, eingreift. Somit kann sich der Scheibenwischer gegenüber der Antriebswelle nicht verdrehen und folgt der Bewegung der Antriebswelle. Ein solcher Scheibenwischer ist beispielsweise in der FR 1308487 beschrieben.

In der Fertigung ist eine weitgehende Standardisierung bestimmter Bestandteile von Scheibenwischern erwünscht, die dann für verschiedene Kraftfahrzeuge eingesetzt werden können. Für verschiedene Kraftfahrzeuge muß der Scheibenwischer dann unterschiedlich ausgerichtet werden. Die Ausrichtung des Wischerarms zu der Antriebswelle bestimmt gleichzeitig die Ausrichtung des Scheibenwischers mit dem Wischerblatt relativ zur Windschutzscheibe.

Die Feinheit der Ausrichtung des Scheibenwischers hängt dabei von dem Abstand der Rillen der Rändelungen an der Antriebswelle und in der Öffnung im Wischerarm ab. Ein gewisser Abstand der Rillen soll dabei nicht unterschritten werden, um die Belastbarkeit des Scheibenwischers zu gewährleisten. Die so erreichbare Feinausrichtung des Scheibenwischers hat sich in der Praxis allerdings als nicht ausreichend erwiesen.

### Aufgabenstellung

Der vorliegenden Erfindung liegt die Aufgabe zugrunde, einen Scheibenwischer, der eine Feinausrichtung des Scheibenwischers relativ zu der Antriebswelle ermöglicht, und ein entsprechendes Verfahren zu dessen Befestigung zu schaffen.

Die der Erfindung zugrunde liegende Aufgabe wird durch einen Scheibenwischer mit den Merkmalen des kennzeichnenden Teils des Patentanspruchs 1 und ein Verfahren zu dessen Ausrichtung mit den Merkmalen des kennzeichnenden Teils des Patentanspruchs 8 gelöst.

Für einen erfindungsgemäßen Scheibenwischer ist in der Öffnung des Wischerarms ein Einspannelement drehbar angebracht, wobei durch die Drehung des Einspannelements eine Drehachse definiert ist, und ändert sich der Abstand der Drehachse von einer Oberfläche des Einspannelements entlang eines Umfangs des Einspannelements.

Vorteilhafterweise ist die Feinausrichtung des Scheibenwischers nicht durch eine Rändelung an der Antriebswelle begrenzt. Es lassen sich außerdem Scheibenwischer mit einem dünnen Wischerarms realisieren.

In einer bevorzugten Ausführungsform ist jeder Querschnitt durch das Einspannelement senkrecht zur Drehachse elliptisch ausgebildet.

Eine elliptische Ausbildung eines jeden Querschnitts durch das Einspannelement senkrecht zur Drehachse ermöglicht es, eine relativ große Berührungsfläche zwischen dem Endabschnitt der Antriebswelle und dem Einspannelement zu schaffen.

In einer alternativen bevorzugten Ausführungsform ist das Einspannelement zu einer Symmetrieachse rotationssymmetrisch ausgebildet, und ist die Drehachse zur Symmetrieachse exzentrisch versetzt.

Auch eine rotationssymmetrische Ausbildung eines jeden Querschnitts durch das Einspannelement senkrecht zur Drehachse ermöglicht es, eine relativ große Berührungsfläche zwischen dem Endabschnitt der Antriebswelle und dem Einspannelement zu schaffen. Zudem läßt sich das rotationssymmetrisches Einspannelement einfach fertigen.

In einer bevorzugten Weiterbildung ist die Oberfläche des Einspannelements entlang der Drehachse konkav ausgebildet.

Hierdurch wird ebenfalls eine relativ große Berührungsfläche zwischen dem Endabschnitt der Antriebswelle und dem Einspannelement geschaffen.

In einer bevorzugten Ausführungsform ist eine Aussparung am Einspannelement ausgebildet, die zum Einstecken eines Werkzeugs vorgesehen ist, um das Einspannelement um die Drehachse zu drehen.

Vorteilhafterweise ermöglicht es eine solche Aussparung, ein Werkzeug mit einer Hebelwirkung anzusetzen, so daß die Antriebswelle fest durch das Einspannelement eingespannt werden kann.

In einer weiteren bevorzugten Ausführungsform ist ein weiteres Einspannelement in der Öffnung des-Wischerarms gegenüber dem Einspannelement vorgesehen.

Die Vorsehung eines weiteren Einspannelements ist fertigungstechnisch vorteilhaft und erlaubt eine besondere Werkstoffwahl für die Elemente des Wischerarms, die mit der Antriebswelle in Berührung kommen.

In einer Weiterbildung der weiteren bevorzugten Ausführungsform ist eine Seitenfläche des weiteren Einspannelements, die vorgesehen ist, um die Antriebswelle zu berühren, konkav ausgebildet.

Ferner betrifft die vorliegende Erfindung ein Verfahren zur Befestigung eines Scheibenwischers mit den Merkmalen des kennzeichnenden Teils des Patentanspruchs 8.

Erfindungsgemäß wird ein Einspannelement um eine Drehachse gedreht, die durch die Drehung des Einspannelements definiert ist und deren Abstand von einer Oberfläche des Einspannelements sich entlang eines Umfangs des Einspannelements ändert.

### Ausführungsbeispiele

Im folgenden wird die Erfindung mit Bezugnahme auf die Zeichnungen näher beschrieben. Es zeigen:
FIG. 1 einen Ausschnitt eines Wischerarmes und einer Antriebswelle, die in eine Öffnung des Wischerarms eingesteckt ist, von der Seite;
FIG. 2 einen Ausschnitt eines Wischerarmes und einer Antriebswelle, die in eine Öffnung des Wischerarms eingesteckt ist, von oben;
FIG. 3 den Ausschnitt des Wischerarmes und der Antriebswelle aus FIG. 3, wobei die Antriebswelle in der Öffnung des Wischerarms eingespannt ist; und
FIG. 4 eine perspektivische Ansicht eines Einspannelements.

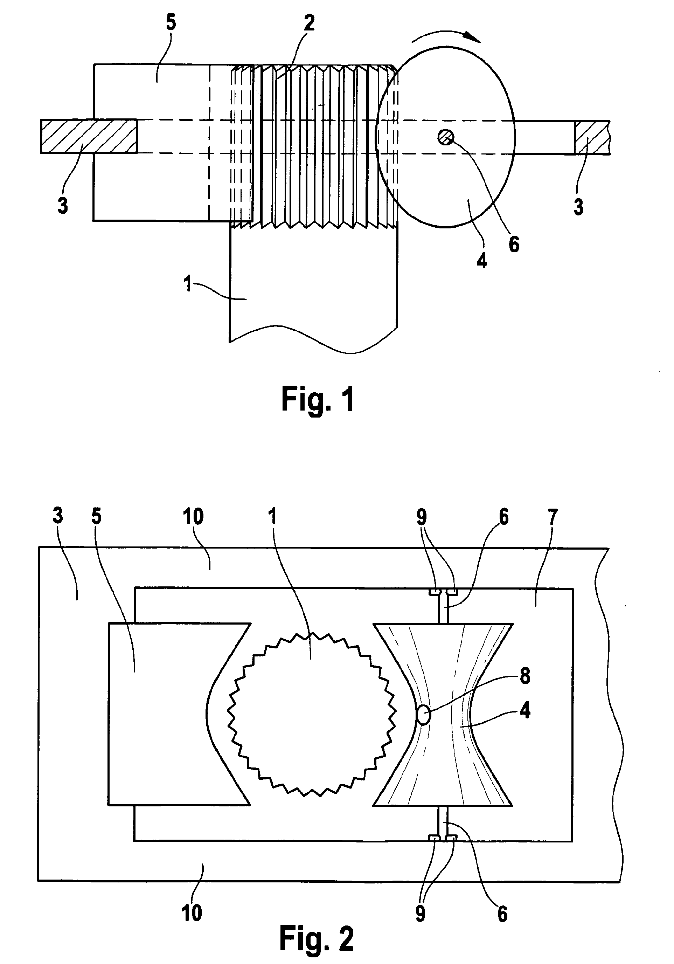

FIG. 1 zeigt einen Ausschnitt eines Wischerarmes 3 und einer Antriebswelle 1, die in eine Öffnung des Wischerarms 3 eingesteckt ist, von der Seite. Der Wischerarm 3 und die Welle 6 sind dabei im Schnitt dargestellt. Die zylindrische Antriebswelle 1 weist am Ende eine Rändelung 2 auf. In der Öffnung sind das Einspannelement 4 und das weitere Einspannelement 5 angebracht. Das Einspannelement 4 könnte auch über und unter der Öffnung im Wischerarm 3 angebracht sein. Dies würde jedoch zu einer Verdickung des Wischerarms 3 führen. Während das Einspannelement 4 um die Welle 6 drehbar angebracht ist, ist das Einspannelement 5 fest in der Öffnung des Wischerarmes 3 angebracht. Als weiteres Einspannelement 5 könnte alternativ auch ein Einspannelement verwendet werden, das ebenfalls drehbar befestigt ist.

Das drehbare Einspannelement 4 weist einen elliptischen Querschnitt auf. Wenn das drehbare Einspannelement 4 in Pfeilrichtung gedreht wird, verringert sich der Abstand des drehbaren Einspannelements 4 zu der Welle 1, bis das drehbar Einspannelement 4 gegen die Welle 1 drückt und diese zwischen den zwei Einspannelementen 4, 5 eingeklemmt wird.

FIG. 2 zeigt einen Ausschnitt eines Wischerarmes 3 und einer Antriebswelle 1, die in eine Öffnung 7 des Wischerarms 3 eingesteckt ist, von oben. Am drehbaren Einspannelement 4 ist eine Aussparung 8 ausgebildet. Diese ermöglicht es, einen Werkzeugkopf in das Einspannelement 4 einzustecken und dieses um die Welle 6 zu drehen. An der Welle 6 in der Nähe der zwei Löcher (nicht gezeigt), in welche die Welle 6 eingesteckt ist, sind Vorsprünge 9 ausgebildet. Diese drücken die beiden Stege 10, die seitlich durch die Ränder des Wischerarms 3 und die Öffnung 7 begrenzt sind, elastisch nach außen. Die Oberfläche des Einspannelements 4 ist konkav und an die Form der Antriebswelle 1 angepaßt. Die Seitenfläche des weiteren Einspannelements 5, welche der Antriebswelle 1 zugekehrt ist, ist ebenfalls konkav an die Form der Antriebselle 1 angepaßt.

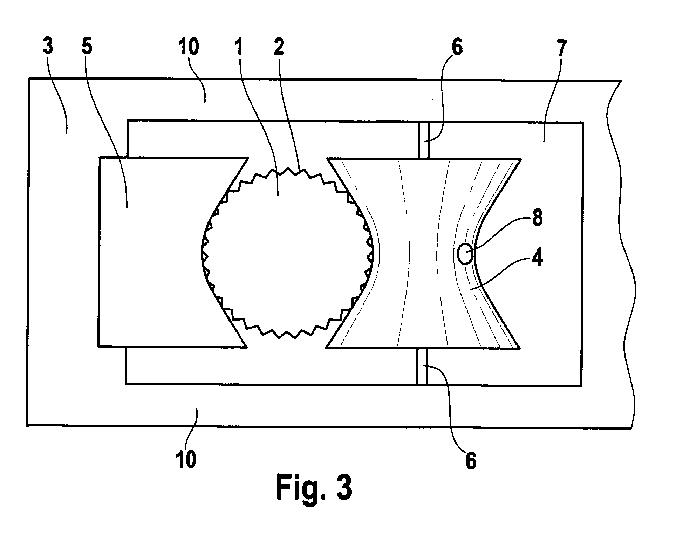

FIG. 3 zeigt den gleichen Ausschnitt wie FIG. 2. Das Einspannelement 4 ist jedoch in eine andere Position gedreht als in FIG. 2, wie anhand der Aussparung 8 zu erkennen ist. Aufgrund des elliptischen Querschnitts des Einspannelements 4 ist die Antriebswelle 1 in dieser Position zwischen dem Einspannelement 4 und dem weiteren Einspannelement 5 eingeklemmt. Die Rändelung 2 an der Antriebswelle 1 greift tief in die Einspannelemente 4, 5 ein, die aus einem geeigneten weichen Werkstoff bestehen. Alternativ kann auch nur eines der beiden Einspannelemente 4, 5 aus Werkstoff bestehen, in welchen die Rändelung 2 eingreifen kann. Die Vorsprünge 9 sind nicht zu sehen, da sie in dieser Position in entsprechenden Aussparungen eingerastet sind (nicht dargestellt), die im Wischerarm 3 in der Nähe der Welle 6 ausgebildet sind. Das Einspannelement 4 kann aus der dargestellten Position nur gedreht werden, wenn die Stege 10 elastisch nach außen gedrückt werden. Die Antriebswelle 1 ist daher für den normalen Scheibenwischerbetrieb sicher zwischen den zwei Einspannelementen 4, 5 eingeklemmt. Dies funktioniert jedoch nur, wenn das Einspannelement 4 drehfest an der Welle 6 angebracht ist.

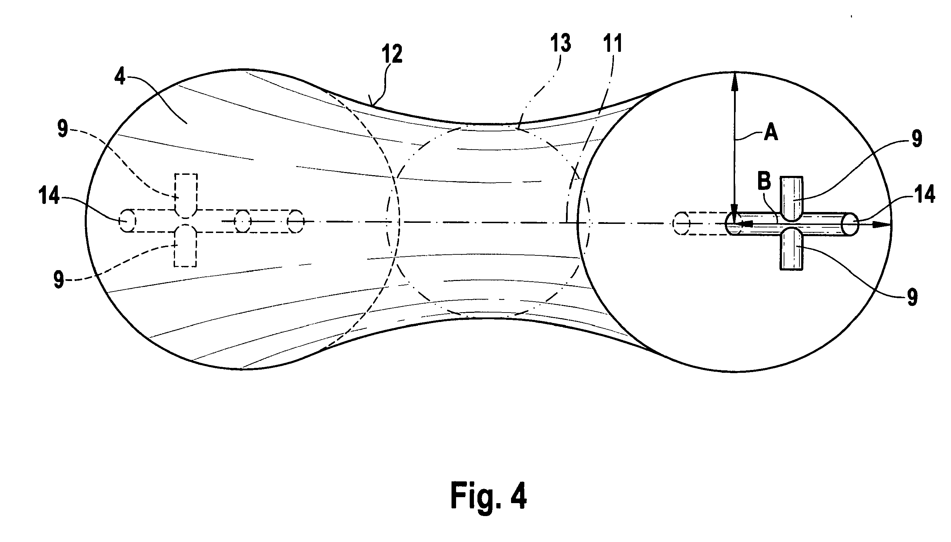

FIG. 4 zeigt eine perspektivische Ansicht eines Einspannelements 4. Zur Anbringung des Einspannelements 4 in der Öffnung des Wischerarms werden zwei Stifte 14 verwendet, die drehfest in das Einspannelement 4 eingesteckt sind. An jedem der Stifte 14 sind zwei Vorsprünge 9 ausgebildet, die zum Feststellen des Einspannelements 4 dienen wie mit Bezugnahme auf die FIG. 1 und 2 beschrieben. Alternativ zu den Stiften 14 kann auch eine durchgehende Welle verwendet werden. Dies erschwert jedoch die Herstellung, da eine mit Vorsprüngen 9 versehene Welle nicht durch das Einspannelement 4 gesteckt werden kann.

Aufgrund der Anbringung der Stifte 14 ist die Drehachse 11 in der Mitte des Einspannelements 4 ausgebildet. Bei der Drehachse 11 handelt es sich also nicht um eine physikalisch vorhandene Achse, sondern eine geometrische Größe, die sich erst aus der Drehung des Einspannelements 4 ergibt. Der Querschnitt des Einspannelements 4 ist senkrecht zur Drehachse 11 elliptisch, das heißt der Abstand A der Drehachse von der Oberfläche 12 ist kleiner als der Abstand B der Drehachse von der Oberfläche 12. Der Abstand der Drehachse 11 von der Oberfläche 12 ändert sich entlang des Umfangs der Einspannelements 4. Die Oberfläche 12 des Einspannelements 4 ist parallel zur Drehachse 11 konkav ausgebildet, so daß ausgehend von zwei Enden des Einspannelements 4 sich der elliptische Querschnitt des Einspannelements 4 senkrecht zu der Drehachse 11 bis zu einem Querschnitt 13 in der Mitte des Einspannelements 4 hin verringert.

Alternativ zu einem elliptischen Einspannelement 4 kann auch ein rotationssymmetrisches Einspannelement verwendet werden.

Dabei wird das Einspannelement so befestigt, daß die Drehachse nicht mit der Symmetrieachse zusammenfällt, sondern versetzt angeordnet ist.

## Patentansprüche

1. Scheibenwischer mit einem Wischerarm (3) der eine Öffnung (7) aufweist, die zum Einstecken einer Antriebswelle (1) vorgesehen ist, wobei in der Öffnung (7) ein Einspannelement (4) drehbar angebracht ist, wobei durch die Drehung des Einspannelements (4) eine Drehachse (11) definiert ist, und wobei sich der Abstand der Drehachse (11) von einer Oberfläche (12) des Einspannelements entlang eines Umfangs des Einspannelements (4) ändert, **dadurch gekennzeichnet, dass** die Oberfläche (12) des Einspannelements (4) entlang der Drehachse (11) konkav ausgebildet ist.

2. Scheibenwischer nach Anspruch 1, **dadurch gekennzeichnet, daß** jeder Querschnitt durch das Einspannelement (4) senkrecht zur Drehachse (11) elliptisch ausgebildet ist.

3. Scheibenwischer nach Anspruch 1, **dadurch gekennzeichnet, daß** das Einspannelement (4) zu einer Symmetrieachse rotationssymmetrisch ausgebildet ist, und daß die Drehachse (11) zur Symmetrieachse exzentrisch versetzt ist.

4. Scheibenwischer nach einem der vorhergehenden Ansprüche, **dadurch gekennzeichnet, daß** eine Aussparung (8) am Einspannelement (4) ausgebildet ist, die zum Einstecken eines Werkzeugs vorgesehen ist, um das Einspannelement (4) um die Drehachse (11) zu drehen.

5. Scheibenwischer nach einem der vorhergehenden Ansprüche, **dadurch gekennzeichnet, daß** ein weiteres Einspannelement (5) in der Öffnung (7) des Wischerarms (3) gegenüber dem Einspannelement (4) vorgesehen ist.

6. Scheibenwischer nach Anspruch 5, **dadurch gekennzeichnet, daß** eine Seitenfläche des weiteren Einspannelements (5), die vorgesehen ist, um die Antriebswelle (1) zu berühren, konkav ausgebildet ist.

7. Verfahren zur Befestigung eines Scheibenwischers mit einem Wischerarm (3) der eine Öffnung (7) aufweist, die zum Einstecken einer Antriebswelle (1) vorgesehen ist, **dadurch gekennzeichnet, daß** ein Einspannelement (4) mit einer Drehachse (11) vorhanden ist, und dei Drehachse (11) durch die Drehung des Einspannelements definiert ist und deren Abstand von einer entlang der Drehachse (11) konkav ausgebildeten Oberfläche (12) des Einspannelements (4) sich entlang eines Umfangs des Einspannelements (4) ändert, wobei das Einspannelement um die
Drehachse (11) gedreht wird.

## Claims

1. Wiper with a wiper arm (3) which has an opening (7) which is provided for the insertion of a drive shaft (1), wherein a clamping element (4) is fitted rotatably in the opening (7), wherein an axis of rotation (11) is defined by rotation of the clamping element (4), and wherein the distance of the axis of rotation (11) from a surface (12) of the clamping element changes along a circumference of the clamping element (4), **characterized in that** the surface (12) of the clamping element (4) is of concave design along the axis of rotation (11).

2. Wiper according to Claim 1, **characterized in that** each cross section through the clamping element (4) is of elliptical design perpendicularly to the axis of rotation (11).

3. Wiper according to Claim 1, **characterized in that** the clamping element (4) is of rotationally symmetrical design with respect to an axis of symmetry, and **in that** the axis of rotation (11) is offset eccentrically with respect to the axis of symmetry.

4. Wiper according to one of the preceding claims, **characterized in that** a recess (8) is formed on the clamping element (4), said recess being provided for the insertion of a tool in order to rotate the clamping element (4) about the axis of rotation (11).

5. Wiper according to one of the preceding claims, **characterized in that** a further clamping element (5) is provided opposite the clamping element (4) in the opening (7) in the wiper arm (3).

6. Wiper according to Claim 5, **characterized in that** a side surface of the further clamping element (5), which side surface is provided in order to make contact with the drive shaft (1), is of concave design.

7. Method for fastening a wiper to a wiper arm (3) which has an opening (7) which is provided for the insertion of a drive shaft (1), **characterized in that** there is a clamping element (4) with an axis of rotation (11), and the axis of rotation (11) is defined by rotation of the clamping element (4) and the distance of said axis of rotation from a surface (12) of the clamping element (4), which surface is of concave design along the axis of rotation (11), changes along a circumference of the clamping element (4), the clamping element being rotated about the axis of rotation (11).

## Revendications

1. Essuie-glace comprenant un bras d'essuie-glace (3) qui présente une ouverture (7) qui est prévue pour l'insertion d'un arbre d'entraînement (1), un élément de serrage (4) étant monté à rotation dans l'ouverture (7), un axe de rotation (11) étant défini par la rotation de l'élément de serrage (4), et la distance de l'axe de rotation (11) à une surface (12) de l'élément de serrage variant le long d'une périphérie de l'élément de serrage (4), **caractérisé en ce que** la surface (12) de l'élément de serrage (4) le long de l'axe de rotation (11) est réalisée sous forme concave.

2. Essuie-glace selon la revendication 1, **caractérisé en ce que** chaque section transversale à travers l'élément de serrage (4) perpendiculairement à l'axe de rotation (11) est réalisée sous forme elliptique.

3. Essuie-glace selon la revendication 1, **caractérisé en ce que** l'élément de serrage (4) est réalisé avec une symétrie de révolution par rapport à un axe de symétrie, et **en ce que** l'axe de rotation (11) est décalé de manière excentrée par rapport à l'axe de symétrie.

4. Essuie-glace selon l'une quelconque des revendications précédentes, **caractérisé en ce qu'**un évidement (8) est réalisé sur l'élément de serrage (4), lequel est prévu pour l'enfichage d'un outil afin de faire tourner l'élément de serrage (4) autour de l'axe de rotation (11).

5. Essuie-glace selon l'une quelconque des revendications précédentes, **caractérisé en ce qu'**un autre élément de serrage (5) est prévu dans l'ouverture (7) du bras d'essuie-glace (3) en face de l'élément de serrage (4).

6. Essuie-glace selon la revendication 5, **caractérisé en ce qu'**une surface latérale de l'autre élément de serrage (5), qui est prévue pour venir en contact autour de l'arbre d'entraînement (1), est réalisée sous forme concave.

7. Procédé de fixation d'un essuie-glace avec un bras d'essuie-glace (3) qui présente une ouverture (7) qui est prévue pour l'insertion d'un arbre d'entraînement (1), **caractérisé en ce qu'**un élément de serrage (4) avec un axe de rotation (11) est prévu, et l'axe de rotation (11) est défini par la rotation de l'élément de serrage (4), et sa distance à une surface (12) de l'élément de serrage (4) réalisée sous forme concave le long de l'axe de rotation (11) varie le long d'une périphérie de l'élément de serrage (4), l'élément de serrage étant tourné autour de l'axe de rotation (11).
